# EUROPÄISCHE PATENTSCHRIFT

(11) **EP 2 710 708 B1**
(45) Veröffentlichungstag und Bekanntmachung des Hinweises auf die Patenterteilung: **12.08.2015**
(21) Anmeldenummer: 12727102.1
(22) Anmeldetag: 21.05.2012
(51) Int. Cl.: B29C 70/32, B29C 70/86, B29C 69/00, B29C 53/60, F04D 25/06, H02K 15/03, H02K 1/27, H02K 15/12

(54) **PERMANENTMAGNETERREGTE ELEKTRISCHE AUSSENLÄUFERMASCHINE, LÄUFER FÜR EINE SOLCHE ELEKTRISCHE MASCHINE UND VERFAHREN ZU DESSEN HERSTELLUNG**
PERMANENT-MAGNET EXTERNAL-ROTOR ELECTRIC MACHINE, ROTOR FOR SUCH AN ELECTRIC MACHINE AND METHOD FOR PRODUCING SAME
MOTEUR ÉLECTRIQUE À ROTOR EXTÉRIEUR, À EXCITATION PAR AIMANTS PERMANENTS, ROTOR POUR UN MOTEUR ÉLECTRIQUE DE CE TYPE ET PROCÉDÉ POUR LE PRODUIRE

(30) Priorität: 19.05.2011 DE 102011102046
(43) Veröffentlichungstag der Anmeldung: 26.03.2014
(73) Patentinhaber: Compact Dynamics GmbH, 82319 Starnberg (DE)
(72) Erfinder: SONTHEIM, Johann, 82346 Andechs-Machtlfing (DE); Riess, Stefan, 86916-Kaufering (DE)
(74) Vertreter: Schmidt, Steffen J.
(86) Internationale Anmeldenummer: PCT/EP2012/002156
(87) Internationale Veröffentlichungsnummer: WO 2012/156103

(56) Entgegenhaltungen:
- EP-A1- 2 073 351
- DE-A1- 4 442 869
- DE-C1- 3 823 113

## Beschreibung

### Hintergrund

Nachstehend ist eine permanentmagneterregte elektrische Außenläufermaschine beschrieben. Insbesondere geht es um eine Transversalflussmaschine mit einem Ständer und einem Läufer, wobei der Ständer eine Ständerspule aufweist und der Läufer mit Permanentmagnet-Elementen versehen ist. Des Weiteren wird ein Läufer für eine solche elektrische Maschine und Verfahren zu dessen Herstellung beschrieben.

### Begriffsdefinitionen

Unter dem Begriff "elektrische Maschine" werden sowohl innen- oder außenlaufende Motoren als auch Generatoren verstanden.

### Stand der Technik

Bei permanentmagneterregten elektrischen Außenläufermaschine können mit Permanent-magnet-Elementen versehene Läufer als Läuferglocken aus Kunststoff gebildet sein. Diese Läuferglocken können ein Läuferrohr aus mit Glasfaser oder Kohlefaser verstärktem Kunststoff und einen Läuferboden aus Metall (zum Beispiel Aluminium, Stahl oder Titan) haben. In eine solche Läuferglocke können Permanentmagnet-Elemente eingeklebt sein.

Die vorwiegend tangential (in Umfangsrichtung) orientierten Glas- oder Kohlefasern des Läuferrohres stellen eine ausreichende Festigkeit gegenüber der Fliehkraftbeanspruchung des Läufers im Betrieb sicher. Der am Läuferrohr angebrachte Läuferboden kann aus Aluminium oder Titan geformt sein. Diese Materialwahl sichert eine hohe radiale Steifigkeit des Läuferbodens. Aus Kostengründen und zur Reduzierung der Läuferträgheit wird der Läuferboden meist aus Aluminium ausgeführt. Aufgrund der unterschiedlichen Wärmeausdehnungskoeffizienten von Aluminium einerseits und dem Glas- oder Kohlefaserverbundwerkstoff andererseits ist Aluminium nicht geeignet für größere Läuferglocken. Titan wäre aufgrund seines niedrigeren Wärmeausdehnungskoeffizienten und geringeren spezifischen Gewichts eine Alternative zu Aluminium, scheidet aber aufgrund der hohen Kosten in der Regel aus.

Die DE 44 42 869 C2 der Fichtel & Sachs AG betrifft einen Läufer für eine elektrische Maschine und ein Verfahren zur Herstellung eines solchen. Um einen Läufer, insbesondere einen Außenläufer, für eine elektrische Maschine zu schaffen, der sich vergleichsweise einfach herstellen lässt und eine hohe Festigkeit hat, schlägt die DE 44 42 869 C2 vor, den Läufer mit einem rohrförmig-zylindrischen Mantelelement auszustatten, das zumindest in einem ersten Querschnittsbereich aus Kunststoffmaterial hergestellt ist, welches mit im Wesentlichen in Umfangsrichtung verlaufendem faserförmigem Armierungsmaterial verstärkt ist. Mit dem Mantelelement ist ein abstehendes Flanschelement fest verbunden. Das Mantelelement ist teilweise mit einem aus Kunststoffmaterial hergestellten, faserförmigem Armierungsmaterial verstärkt, das in mehreren Erstreckungsrichtungen sich kreuzend unter einem Winkel zwischen 5° und 45° schräg zur Umfangsrichtung verläuft. Die Armierung des zweiten Querschnittsbereichs soll die Biegefestigkeit des Läufers verbessern. Die Erstreckungsrichtungen dieses Armierungsmaterials in dem zweiten Querschnittsbereich verlaufen bevorzugt in einem Winkel zwischen 5° und 25° schräg zur Umfangsrichtung; dies soll die in Umfangsrichtung erreichbare Spannungsbelastbarkeit des Mantelelements um eine Größenordnung größer als in Axialrichtung werden lassen. Der zweite Querschnittsbereich wird dabei mit mehreren Lagen einer vorgefertigten Armierungsmatte armiert, in der das Armierungsmaterial in mehreren vorbestimmten Erstreckungsrichtungen von Lage zur Lage abwechselnd oder innerhalb der einzelnen Lagen sich kreuzend angeordnet ist. Die Armierungsmatten können im Wesentlichen unidirektional gerichtete Fasern oder Fäden haben, wenn sie bezogen auf die Umfangsrichtung des Mantelelements mit schräg verlaufender Faserrichtung eingebaut werden. Aufeinanderfolgende Lagen werden dann abwechselnd mit unterschiedlicher, zweckmäßigerweise zur Umfangsrichtung spiegelsymmetrischer Faserrichtung eingebaut. Die DE 44 42 869 C2 schlägt auch Armierungsmatten mit Gitterstruktur vor. Das Flanschelement aus der DE 44 42 869 C2 ist integral mit dem Mantelelement verbunden, so dass es durch Spritzgießen, zusammen mit dem Mantelelement hergestellt wird. Das Kunststoffmaterial, aus dem das Flanschelement hergestellt ist, ist in einem ersten Axial-Längsschnittbereich mit einem Stapel aus mehreren, im Wesentlichen flächig übereinanderliegenden, vorgefertigten, scheibenförmigen Armierungsmatten armiert. Die Armierungsmatten sind in einem periodischen, zu 360° sich ergänzenden Versatzmuster zueinander um die Drehachse herum winkelversetzt angeordnet. Das in das Kunststoffmaterial des Mantelelements und des Flanschelements eingebettete Armierungsmaterial wird bei der Herstellung des Läufers zu einem Armierungskörper vorgeformt. Als Kunststoffmaterial dient ein Material, das im Zweikomponenten-Spritzgußverfahren (Reaction-Injection-Moulding- oder RIM-Verfahren) formbar ist. In das Flanschelement ist ein aus Metall bestehendes ringförmiges Nabenteil eingegossen. Das Nabenteil hat eine freiliegende, axiale oder/und radiale Anschlußfläche und bildet einen Adapter, an den ein Lageransatz oder eine Welle oder dergleichen angeflanscht wird. Das Nabenteil hat in Umfangsrichtung verteilt, mehrere im Kunststoffmaterial des Flanschelements eingebettete Verankerungsorgane und radial innerhalb des Anordnungskreises der Verankerungsorgane in der freiliegenden Anschlussfläche mehrere axial durchgehende Befestigungslöcher.

Die DE 38 23 113 C1 der Uranit GmbH betrifft ein Verfahren zum Herstellen eines Spalttopfes aus Faserverbundwerkstoff für elektrisch oder magnetische Antriebsaggregate aus Faserverbundwerkstoff mit einem Anschlußflansch und einem abgeflacht gewölbten Boden, der gegenüber dem zylindrischen Teil des Spalttopfes verstärkt ist. Der Mantel des Spalttopfes wird aus Schichten von Umfangs- und Helixwicklungen gewickelt. Ein solcher Spalttopf wird üblicherweise z.B. in einer Magnetkupplungspumpe verbaut. Eine Magnetkupplungspumpe vereint eine herkömmliche Pumpenhydraulik mit einem permanentmagnetischen Antrieb, wobei Dauermagneten in beiden Kupplungshälften sich zur berührungslosen und schlupflosen Drehmomentübertragung anziehen und abstoßen. Zwischen den zwei mit Magneten bestückten Kupplungshälften befindet sich der Spalttopf, der einen Produktraum von der Umgebung trennt. Die Pumpe wird angetrieben, indem ein Magnettreiber einen Magnetträger berührungsfrei und schlupflos in Rotation versetzt. Der Magnetträger treibt dann ein Pumpenlaufrad. Zwischen dem Magnettreiber und dem Magnetträger liegt der Spalttopf, der das zu fördernde Gut von der Umwelt trennt und leckagefrei ist. Metallische Spalttöpfe verursachen durch das rotierende Magnetfeld Wirbelstromverluste, die zu vermeiden sind, wenn der Spalttopf z. B. aus Kunststoff hergestellt wird. Dabei ist der Spalttopf im Betrieb der Magnetkupplungspumpe unbewegt, d.h. er ist völlig anderen Belastungen ausgesetzt als der sich drehende Läufer einer elektrischen Maschine. Ein Spalttopf hat druckstabil zu sein und sollte keine Wirbelstromverluste verursachen. Bei der hier beschriebenen Wickeltechnik wird der Topfboden im Anschluss an die Helixwicklungen mit angewickelt, soll die Herstellung formstabiler, dünnwandiger Spalttöpfe gestatten, die im Mantel- und im Bodenbereich sehr hohen Betriebsdrücken standhalten. Dieser Spalttopf ist aus Faserverbundwerkstoff mit einem Anschlussflansch und einem abgeflacht gewölbten Boden gebildet. Der Boden ist gegenüber dem zylindrischen Teil des Spalttopfes verstärkt. Dazu ist in den Topfboden eine dessen zentrale Öffnung überdeckende Verstärkungs- und Verschlußkappe eingeklebt, die mit ihrem Rand bis in den zylindrischen Teil des Topfes reicht. Der Mantel des Spalttopfes aus der DE 38 23 113 C1 ist aus Schichten von Umfangs- und Helixwicklungen gewickelt. Die Helixwicklungen sind unter einem Winkel - gemessen gegen die Längsachse - von 10° bis 40° gewickelt. Dabei sind die Fasern für die Helixwicklungen des Spalttopfmantels aus der DE 38 23 113 C1 radial um die Polkappe des Wickeldorns unter Anlage an den Zapfen unter einem Zapfen-Umschlingungswinkel zwischen 10° und 40° geführt.

Technologischer Hintergrund zu dieser permanentmagneterregten elektrischen Außenläufer-maschine, dem Läufer für eine solche elektrische Maschine und dem Verfahren zu dessen Herstellung ist den Dokumenten DE 10 2009 021 A1, DE 199 60 182 A1, US 2001 / 0 036 565 A1, US 2007 / 0 297 905 A1 entnehmbar.

### Zugrundeliegendes Problem

Das Ziel ist, eine kompakt bauende und hocheffiziente elektrische Maschine bereit zu stellen.

### Lösung

Als Lösung wird eine permanentmagneterregte elektrische Maschine mit den Merkmalen des Patentanspruchs 1 vorgeschlagen. Insbesondere wird eine Permanentmagneterregte elektrische Maschine mit einem Ständer und einem Läufer vorgeschlagen, wobei der Ständer eine Spulenanordnung aufweist und der Läufer mit Permanentmagnet-Elementen versehen ist, zwischen dem Ständer und dem Läufer ein Luftspalt gebildet ist, der von den Permanent-magnet-Elementen und mit auf diese in bestimmten Positionen ausgerichteten magnetisch leitenden Zähnen des Ständers begrenzt ist, wobei der Läufer eine Läuferglocke aufweist, die mehrere Lagen Harz-Faserverbundwerkstoff aufweist, ein integraler Körper ist, der ein Läuferrohr und einen Läuferboden aufweist, und im oder nahe dem Zentrum des Läuferbodens Befestigungselemente in Form von Schraubengewinden, Zapfen oder Gewindehülsen angeordnet sind, um die Läuferglocke mit einer Maschinenwelle zu koppeln, und im Bereich des Läuferbodens wenigstens ein Filamentbündel aufweist, wobei das wenigstens eine Filamentbündel jeweils in etwa symmetrisch um ein Befestigungselement gelegt ist, wobei das Filamentbündel an dem Befestigungselement abgeknickt und unter einem Winkel von etwa 70° bis etwa 110° weitergeführt ist, vom Zentrum des Läuferbodens im Wesentlichen entlang gedachter Radien oder Sekanten über den Außenrand des Läuferbodens reicht, und am Außenrand des Läuferbodens abgewinkelt ist und ununterbrochen in das Läuferrohr in axialer Richtung und/oder unter einem Winkel zur Mittellängsachse des Läuferrohres bis zu dessen freiem Randbereich übergeht, wobei im Bereich des Läuferrohres wenigstens ein in Umfangsrichtung des Läuferrohres liegendes schraubenförmiges Filamentbündel angeordnet ist, und wobei die Läuferglocke an der Innenseite oder an der Außenseite des Läuferrohrs die Permanentmagnet-Elemente trägt, die in den Harz-Faserverbundwerkstoff eingebettet sind.

Diese Lösung erlaubt, eine permanentmagneterregte elektrische Maschine mit hoher Leistungsdichte bei für die Serienfertigung optimiertem Aufbau bereitzustellen. Analog dazu kann damit für eine solche permanentmagneterregte elektrische Maschine eine Läuferglocke bereit gestellt werden, die eine hohe Steifigkeit gegenüber auf sie wirkenden Kräften und Momenten hat, und bei hoher Gestalttreue einfach und effizient zu fertigen ist. Dabei kann das Filamentbündel eine oder mehrere Fasern sehr großer, praktisch unbegrenzter Länge aufweisen, die zusammen verdreht oder einzeln nebeneinander geführt sind.

### Eigenschaften und Ausgestaltungen der elektrischen Maschine, des Läufers und des Herstellungsverfahrens

Eine solche permanentmagneterregte elektrische Maschine hat eine sehr steife Läuferglocke mit hoher Formgenauigkeit und Reproduzierbarkeit. Dabei kann die hohe Festigkeit und Steifigkeit der Faser in deren Längsrichtung zur Gestaltung der Läuferglocke der elektrischen Maschine optimal genutzt werden. Durch den homogenen, integralen, einteiligen Aufbau der Läuferglocke ohne Fügestelle zwischen Läuferrohr und Läuferboden ist die Läuferglocke robust und formstabil gegenüber im Betrieb der elektrischen Maschine auftretenden Kräften und Momenten. Die nachstehend beschriebenen Maßnahmen zur weiteren Ausgestaltung wirken synergistisch mit den oben beschriebenen Merkmalen zusammen; sie bewirken eine technisch und wirtschaftliche Gesamtanordnung einer elektrischen Maschine bzw. eines entsprechenden Läufers sowie eines optimierten Herstellungsverfahrens.

Nach dem Tränken des wenigstens einen Filamentbündels mit Harz und dem Aushärten sind diese Elemente unverlierbar und korrekt positioniert in der Läuferglocke aufgenommen. Das wenigstens eine Filamentbündel kann aus einer Vielzahl von zwischen 10 und 1000 Fasern aus Glas, Kohle oder Aramid® gebildet sein. Zur Erhöhung der Gestalttreue der Läuferglocke kann das wenigstens eine Filamentbündel auch vernäht oder verklebt sein.

Der Läuferboden der Läuferglocke kann eine etwa kreisrunde oder polygonale Gestalt an seinem Außenumfang aufweisen und als Polygonscheibe, als Kreisscheibe, oder Polygonscheibenring oder als Kreisscheibenring ausgestaltet sein. Der Läuferboden der Läuferglocke kann dabei sowohl auch im Wesentlichen eben, als auch gewölbt sein.

Das Läuferrohr der Läuferglocke kann einen dem Läuferboden ähnliche, etwa kreisrunde oder polygonale Querschnitt aufweisen, wobei der Läuferboden wenigstens ein auf gedachten Sekanten oder Radien liegendes im Wesentlichen parallel verlaufendes Filamentbündel aufweist, dessen wenigstens eines Ende über den Außenrand des Läuferbodens reicht, am Außenrand des Läuferbodens abgewinkelt ist und in das Läuferrohr übergeht.

Die Läuferglocke kann eine ungleichförmige Wanddicke aufweisen und/oder vollständig aus Harz-Faserverbundwerkstoff gebildet sein.

Die Läuferglocke kann aus wenigstens einem schraubenförmig gewickelten Filamentbündel, aus Filament oder ringförmigem Fasergeflecht und/oder im Wesentlichen parallel verlaufendem Filamentbündel gebildet sein, das sich lagenweise zumindest teilweise überdeckend angeordnet ist.

Die Läuferglocke kann an ihrer dem Luftspalt zugewandten Seite in dem Harz-Faserverbund aufgenommene Permanentmagnet-Elemente aufweisen. Die Permanentmagnet-Elemente können an den Stellen, an denen sie weniger als 90% des durch das jeweilige Permanentmagnet-Element maximal fließenden magnetischen Flusses tragen, konturiert sein.

Die Permanentmagnet-Elemente können auf ihrer vom Luftspalt abliegenden Seite und/oder an ihren dem Luftspalt zugewandten Rändern konturiert, gewellt oder mit stufenförmigen Aussparungen versehen sein. Dies verringert das Gewicht des Läufers und spart Magnetmaterial ein.

Zur Herstellung einer Läuferglocke, geeignet und bestimmt zum Einsatz in einer vorstehend beschriebenen permanentmagneterregten elektrischen Maschine, kann folgendes Verfahren dienen:
Bereitstellen eines Formkerns mit einem ersten und einem zweiten Formboden und einem zylindrischen Zwischenteil eines mehrteiligen Formwerkzeuges;
sich lagenweise zumindest teilweise überdeckendes Aufbringen von wenigstens einem Filamentbündel auf den Formkern, um zwei in ihren Randbereichen aneinander angrenzende Läuferglocken zu bilden, indem das wenigstens eine Filamentbündel ununterbrochen über den ersten Formboden entlang des zylindrischen Zwischenteils und über den zweiten Formboden gewickelt wird, wobei das wenigstens eine Filamentbündel vom Zentrum des ersten Formbodens im Wesentlichen entlang gedachter Radien oder Sekanten über den Außenrand des ersten Formbodens reicht, und das wenigstens eine Filamentbündel am Außenrand des ersten Formbodens abgewinkelt ist und ununterbrochen entlang des zylindrischen Zwischenteils des Formkerns in axialer Richtung und/oder unter einem Winkel zur Mittellängsachse des zylindrischen Zwischenteils bis über den zweiten Formboden reicht; wodurch ein integraler Körper gebildet wird, der zwei gegengleich Läuferglocken verkörpert, von denen jede ein Läuferrohr und einen Läuferboden aufweist, bei denen im oder nahe dem Zentrum des Läuferbodens Befestigungselemente in Form von Schraubengewinden, Zapfen oder Gewindehülsen angeordnet sind, um die Läuferglocke mit einer Maschinenwelle zu koppeln, und die im Bereich jedes Läuferbodens wenigstens ein Filamentbündel aufweisen, wobei das wenigstens eine Filamentbündel jeweils in etwa symmetrisch um ein Befestigungselement gelegt ist, wobei das Filamentbündel an dem Befestigungselement abgeknickt und unter einem Winkel von etwa 70° bis etwa 110° weitergeführt ist, und wobei im Bereich des Läuferrohres wenigstens ein in Umfangsrichtung des Läuferrohres liegendes schraubenförmiges Filamentbündel angeordnet ist,
Aushärten des aus dem wenigstens einen Filamentbündel und dem Harz gebildeten Faserverbundkörpers; und
Durchtrennen des Faserverbundkörpers quer zur Mittellängsachse des zylindrischen Zwischenteils um zwei separate Läuferglocken zu erhalten, und
Entformen der zwei separaten Läuferglocken von dem Formkern.

Das wenigstens eine Filamentbündel kann vor oder beim Aufbringen auf den Formkern mit Harz getränkt werden, und der aus dem wenigstens einen Filamentbündel und dem Harz gebildete Faserverbundkörpers kann vor dem Durchtrennen des Faserverbundkörpers aushärten.

Bei einem vorteilhaften Verfahren zur Herstellung können wenigstens zwei Läuferglocken einer permanentmagneterregten elektrischen Maschine auf einmal hergestellt werden, wobei das wenigstens eine Filamentbündel als praktisch endloses Filamentbündel mehrfach um den ersten und den zweiten Formboden sowie den zylindrischen Zwischenteil geschlungen wird, wobei gleichzeitig der Formkern kontinuierlich oder unterbrochen um seine Mittellängsachse gedreht wird. Alternativ oder zusätzlich kann wenigstens ein das wenigstens eine Filamentbündel (FB) zum Formkern zuführender Wickelkopf im Wesentlichen parallel oder unter einem spitzen Winkel zur Mittellängsachse des Formkerns hin- und her verschoben werden. Abhängig von der Drehbewegung des Formkerns um seine Mittellängsachse sowie um die Bahn der Bewegung, mit der das wenigstens eine Filamentbündel um den Formkern geschlungen wird, entsteht ein Faserverbund, aus dem die Läuferglocken kraftfluss- und drehmomentengerecht für den späteren Betrieb geschnitten werden können.

Durch gleichzeitiges Formen zweier Läuferglocken auf einem gemeinsamen Formkern verringert sich der Herstellungsaufwand erheblich. Bei dem vorgestellten Herstellungsverfahren werden gleichzeitig zwei Läuferglocken gegenüber gestellt, indem eine homogene "Formblase" aus dem wenigstens einen Filamentbündel gewickelt wird. Wenn die Formblase aus mit Harz getränktem Filamentbündel gewickelt wird, kann diese Formblase nach dem Aushärten des Harzes mittig getrennt werden. Es ist aber auch möglich, die nur aus Filament und etwaigen Befestigungselementen gebildete, ungetränkte Formblase mittig zu trennen und erst in einem weiteren Prozessschritt mit Harz zu versetzen. Bei beiden Varianten können mit einem Wickelprozess zwei Läuferglocken, nahezu ohne Verschnitt oder Abfall gefertigt werden. Ein als Innenform dienender Wickeldorn oder Formkern kann vor dem Bewickeln mit dem wenigstens einen Filamentbündel mit Permanentmagnet-Elementen bestückt werden. Der Wickeldorn kann nach dem Tempern der Formblase und deren hälftigem Trennen zum Erhalten der beiden Läuferglocken wieder mit Permanentmagnet-Elementen bestückt und dem wenigstens einen Filamentbündel bewickelt werden. Die Formblase wird dadurch gebildet, dass das wenigstens eine Filamentbündel im Endlosprozess, entsprechend der erforderlichen Geometrie / strukturellen Anforderungen der Läuferglocken um den Wickeldorn geführt wird, während dieser um seine Achsen gedreht und geschwenkt wird. Die Formblase kann vorzugsweise im Nasslaminierverfahren hergestellt werden, so dass sie nach dem Wickeln nur noch getempert werden muss. Selbst bei im Stand der Technik bekannten Anordnungen mit vergleichbaren Symmetrien wurde die Vorgehensweise, zwei Läuferglocken "gleichzeitig" zu fertigen, bisher noch nicht vorgeschlagen; der sich hieraus ergebende Effizienzgewinn in der Fertigung ist signifikant.

Eine Variante des Verfahrens hat des Weiteren folgende Schritte:
Einbringen des Formkerns mit dem darauf aufgebrachten wenigstens einen Filamentbündel in wenigstens eine Formschale des Formwerkzeuges, so dass eine Kavität gebildet ist, in der sich das wenigstens eine Filamentbündel befindet; Abdichten der Kavität des Formwerkzeuges; Injizieren von Harz in die Kavität des Formwerkzeuges; Aushärten der aus dem wenigstens einen Filamentbündel und dem injizierten Harz gebildeten wenigstens zwei Läuferglocken; und Entformen der wenigstens zwei Läuferglocken aus der Kavität.

In einer Variante des Verfahrens werden zusätzlich oder alternativ folgende Schritte ausgeführt: Aufbringen von Permanentmagnet-Elementen auf den Formkern vor dem Aufbringen des wenigstens einen Filamentbündels auf den Formkern oder auf die wenigstens eine Formschale vor dem Einbringen des Formkerns mit dem darauf aufgebrachten wenigstens einen Filamentbündel in die wenigstens eine Formschale.

Bei dieser Vorgehensweise sind keine Preforms, Prepeg oder andere Zuschnitte erforderlich. Außerdem kann abhängig von den Anforderungen beim Schlingen um den Formkern das Filament axial oder tangential geführt werden, was zu einer optimalen Festigkeit und Steifigkeit der so erhaltenen Läuferglocken führt.

Durch den Endlosprozess können die Läuferglocken nahezu ohne Verschnitt gefertigt werden. Als Werkzeug ist lediglich ein einfacher Wickeldorn erforderlich, der wieder verwendbar ist. Das Bewickeln des Formkerns kann mit einer numerisch gesteuerten Wickelmaschine erfolgen, was eine prozessüberwachte, automatisierte Fertigung ermöglicht. Manuelle Arbeitsschritte können dabei entfallen.

Das Verfahren zur Herstellung wenigstens zweier Läuferglocken kann auch die folgenden Schritte umfassen: Lagenweise abwechselnd einander zumindest teilweise überdeckendes Aufschichten des wenigstens einen Filamentbündels als schraubenförmiger Wickelkörper, aus Filamenten oder ringförmigem Fasergeflecht, und/oder wenigstens eines im wesentlichen parallel verlaufenden Filamentbündels auf den Formkern oder auf die wenigstens eine Formschale, um die Läuferböden und/oder die Läuferrohre der beiden Läuferglocken zu bilden.

Dabei können die Filamentbündel zum Beispiel aus unverdrehten, gestreckten Filamenten so auf dem Formkern - spannungsfrei - abgelegt werden, dass nach dem Tränken mit Harz, dessen Aushärten und Halbieren der Harz-Faserverbund die Läuferglocken im Betrieb kraftfluss- und drehmomentengerecht bildet.

Alternativ hierzu können die Filamentbündel auch als unter Zugspannung stehende Filamente, die vor dem Aufbringen auf den Formkern mit dem Harz beladen werden, so auf dem Formkern abgelegt werden, dass der Harz-Faserverbund nach dem Aushärten des Harzes und Halbieren des Harz-Faserverbundes die Läuferglocken im Betrieb kraftfluss- und drehmomentengerecht bildet.

Der bewickelte Formkern mit dem darauf aufgebrachten wenigstens einen Filament kann in eine ein- oder mehrteilige Formschale des Formwerkzeuges eingebracht werden, so dass eine Kavität gebildet ist, in der sich das wenigstens eine Filamentbündel befindet. Diese Kavität des Formwerkzeuges wird dann abgedichtet und verschlossen. Nachfolgend wird über eine erste Zuleitung ein externer, mit Harz befüllter Vorratsbehälter mit dem Werkzeug gekoppelt. Ferner wird über eine zweite Zuleitung eine Unterdruckpumpe mit dem Werkzeug pneumatisch gekoppelt. Bei einem Anlegen von Unterdruck an der zweiten Zuleitung und/ oder Überdruck auf den mit Harz befüllten Vorratsbehälter wird sodann Kunstharz aus dem externen Vorratsbehälter über die erste Zuleitung in das Werkzeug gefördert. Dadurch wird das Formblasen-Faserhalbzeug der beiden Läuferglocken mit Harz durchsetzt. So kann erreicht werden, dass die fertigen beiden Läuferglocken nur wenige und zudem möglichst kleine Lufteinschlüsse aufweisen.

Durch die Zufuhr von Wärme, welche über geeignete Heizelemente dem Werkzeug und damit dem von Harz durchsetzten wenigstens einen Filamentbündel zugeführt wird, erfolgt anschließend eine Aushärtung des Harzes, so dass die einzelnen Fasern des Formblasen-Faserverbundes innig miteinander verbunden werden. Nach dem Aushärten und Teilen der Läuferglocken aus den Formblasen-Faserverbundes erfolgt das Entformen der Läuferglocken aus der Kavität. Nach einer Reinigung beider Werkzeugteile steht das Werkzeug für die Herstellung neuer Läuferglocken zur Verfügung.

Mit diesem Verfahren können auch komplette Läuferglocken aus Faserverbundkunststoff hergestellt werden, indem Permanentmagnet-Elemente auf den Formkern vor dem Aufbringen der Formblasen auf den Formkern oder auf die Formschale vor dem Einbringen des Formkerns mit dem darauf aufgebrachten Formblasen-Faserverbund in die Formschale aufgebracht werden.

Zum kraftfluss- und drehmomentengerechten Aufbau des Faserhalbzeugs werden aus den Faserbündeln oder Fasersträngen unverdrehte, gestreckte Filamenten diese durch Flechten, Sticken und/oder Nähen miteinander verbunden. Dabei kann auch direktes Faserablegen auf dem Formkern erfolgen. Dies erlaubt eine automatisierte Fertigung für kostengünstige Läuferglocken aus Faserverbundwerkstoffen. Vorteile gegenüber etablierten Verfahren wie Prepreg oder Handlaminieren sind ein optimiertes Gewicht der Läuferglocken, die bessere Reproduzierbarkeit, ihre Großserientauglichkeit, aber auch spezielle Eigenschaften wie höhere Stoß- oder Schlagresistenz, durch Flechten sowie besonders kraftflussgerechte Faserablage und Verstärkung der Filamente.

Das Aufbringen des wenigstens einen Filamentbündels auf den Formkern kann so erfolgen, dass der Läuferboden und das Läuferrohr eine Filamentstruktur haben, dass nach dem Tränken mit Kunstharz und dessen Aushärten die im Betrieb der elektrischen Maschine auftretenden Fliehkräfte, Kippmomente, Taumelkräfte, Drehmomente, etc., also Einflüsse auf den Läufer, die dessen Ausrichtung zur Maschinenwelle und ihre Formstabilität zum Ständer der elektrischen Maschine beeinflussen, optimal kompensiert sind.

Insgesamt wird ein Läufer für eine permanentmagneterregte elektrische Maschine vorgestellt, der hinsichtlich mechanischer Spannungen optimiert ist, und der als dreidimensionaler Harz-Faserverbundaufbau eine sehr hohe Steifigkeit hat. Die Serienfertigung ist durch die Filamentbündel gut zu realisieren. Zusätzliche Bauteile können im gleichen Prozess mit in die Läuferglocke einlaminiert werden.

Damit ergibt sich gegenüber herkömmlichen Anordnungen eine Reduzierung der Bauteile und Fügeprozesse sowie eine Erhöhung der Steifigkeit bei Reduzierung von Gewicht und Trägheitsmoment. Durch das durchgehende, gleiche, homogene Material im Läuferboden und im Läuferrohr besteht keine Gefahr durch Delaminierung aufgrund unterschiedlicher Materialeigenschaften. Funktionsbauteile wie zum Beispiel Permanentmagnet-Elemente können im Fertigungsprozess mit einlaminiert werden. Zusätzliche Klebeprozesse entfallen.

Je nach Werkzeuggestaltung und Materialwahl ist eine Endmaßfertigung möglich. Somit kann eine aufwendige und kostenintensive Nachbearbeitung der Bauteile häufig entfallen.

Bei bekannten Anordnungen werden Permanentmagnet-Elemente einzeln in / an einen vorgefertigten Läufer geklebt. Dabei summieren sich die Toleranzen von Läuferglocke, Permanentmagnet-Elementen, sowie die Kleber- und Montagetoleranzen in Richtung Luftspalt auf. Dieser Toleranzbereich kann in radialer Richtung ca. 0,5 mm und mehr betragen und reicht in den Luftspalt hinein. Dabei können Permanentmagnet-Elemente mit dem Ständer kollidieren. Des Weiteren wird durch die unterschiedlichen Luftspaltmaße eine stark schwankende Erregung der elektrischen Maschine hervorgerufen, was eine instabile Regelung der Maschine zur Folge hat. Eine Vergrößerung des Luftspaltes würde zu einem erheblichen Drehmoment und Leistungsverlust führen. Zur Vermeidung dieses Problems werden die Permanentmagnet-Elemente mit Übermaß verbaut und anschließend der Läufer auf Sollmaß ausgeschliffen. Die bedeutet einen Verlust von ca. 10% des Permanentmagnet-Elementmaterials, stellt einen zusätzlichen, teuren Arbeitsprozess dar, erfordert eine aufwändige Reinigung der Läuferglocke zur Entfernung des magnetischen Schleifstaubes. Außerdem wird dabei der Korrosionsschutz der Permanentmagnet-Elemente abgeschliffen und muss neu aufgebracht werden.

Dabei kann ein Aufbringen von Permanentmagnet-Elementen auf den Formkern vor dem Aufbringen des Filamentbündels auf den Formkern oder auf die Formschale vor dem Einbringen des Formkerns mit dem darauf aufgebrachten Filamentbündel in die Formschale erfolgen.

Die Permanentmagnet-Elemente werden im Fall einer Außenläufermaschine dabei auf den ferromagnetischen Formkern vor dem Aufbringen des wenigstens einen Filamentbündels aufgebracht. Im Fall einer Innenläufermaschine werden die Permanentmagnet-Elemente auf die Formschale vor dem Einbringen des Formkerns mit dem darauf aufgebrachten wenigstens einen Filamentbündel in die Formschale aufgebracht. Die Magnete bleiben aufgrund ihrer magnetischen Anziehungskraft stabil auf dem Formkern bzw. der Formschale positioniert. Bei unmagnetisierten Magneten kann die Haltekraft durch Permanentmagnet-Elemente, Elektromagnete oder Unterdruck auf den dem Formkern bzw. der Formschale fixiert werden. Anschließend werden die Magnete einlaminiert, und als Endprodukt ergibt sich eine fertige Läuferglocke. Der Positionierdorn dient dabei als Wickeldorn.

Der Formkern bzw. die Formschale bilden hier den idealen Luftspaltdurchmesser ab. Alle auftretenden Toleranzen summieren sich an der dem Luftspalt der elektrischen Maschine abgewandten Seite der Permanentmagnet-Elemente und wirken sich somit nicht auf den Luftspalt aus. Die an der vom Luftspalt abgewandten Maßabweichungen der Permanentmagnet-Elemente haben keinen Einfluss auf die Funktion der elektrischen Maschine, da sie durch die Einbettung der Permanentmagnet-Elemente in den Harz-Faserverbundwerkstoff ausgeglichen werden. Eine aufwändige Nachbearbeitung der Läuferglocke kann entfallen.

Durch die beschriebene Toleranzkompensation können auch mit erhebliche Maßabweichungen aufweisenden Permanentmagnet-Elementen hoch präzise Läuferglocken kostengünstig gefertigt werden. Damit ist die Verwendung von kostengünstigen, da ungeschliffenen Permanentmagnet-Elementen möglich. Hoch präzise dimensionierte, formstabile Läuferglocken ermöglichen einen sehr kleinen Luftspalt. Dies erlaubt eine Erhöhung der magnetischen Erregung, oder einer Einsparung von Magnetmaterial. Der Korrosionsschutz der Magnete bleibt erhalten und wird nicht aufgrund von Nachbearbeitungsprozessen (Ausschleifen) abgetragen. Durch das Einlaminieren in die Läuferglocke entfällt der Klebeprozess. Die sonst bei einer Nachbearbeitung erforderliche Reinigung der Läuferglocke entfällt.

Die in ihrem strukturellen Aufbau komplexen Harz-Faserverbundkunststoffe haben einen hohen Faservolumengehalt. Nach dem Tränken des trockenen wenigstens einen Filamentbündels mit Harz und anschließendem Aushärten des Formblasen-Faserharzverbundes und Ausformen entstehen die fertigen Läuferglocken. Das Verfahren ist ein geschlossener Prozess, der enge Fertigungstoleranzen bezüglich Bauteilgewicht, Faservolumengehalt und Bauteilmassen bietet.

Die Permanentmagnet-Elemente des Läufers können als Guß-, Press, oder Schnitt-Teile aus einer AINi- oder AINiCo-Legierung, aus Barium- oder Strontiumferrit, aus einer SmCo- oder NdFeB-Legierung oder dergl. gebildet sein. Damit sind sehr hohe Energieprodukte (BH)ₘₐₓ auch im erhöhten Temperaturbereich von etwa 150 bis etwa 180 Grad Celsius erreichbar.

Zur Verbesserung der mechanischen Stabilität können die Permanentmagneten auch als Pulverteilchen eingebettet in temperaturbeständige Kunststoffbinder enthaltend zum Beispiel Polyamid, Polyphensulfid, Duroplast, Epoxidharz, oder dergl. gebildet sein. Es kann sich bei dem temperaturbeständigen Kunststoffbinder auch um Methacrylatklebstoff, Epoxidharzkleber, Polyurethan- oder Phenolharzklebstoff, Epoxydharz mit Faserverstärkung, oder hydrophobiertes Epoxydgießharz handeln.

Die Permanentmagnet-Elemente können eine im Wesentlichen quaderförmige Gestalt haben. Sie können eine Gestalt haben, die im Wesentlichen mit der Gestalt der Magnetfluss-Joche des Ständers übereinstimmt; Die Permanentmagnet-Elemente können in der Draufsicht zum Luftspalt hin also rechteckig, trapez- oder dreieck-, bzw. rautenförmig, oder dergl. sein. Weiterhin können die Permanentmagnet-Elemente auch als Ringsegmente oder als komplette Ringe ausgestaltet sein. Dabei kann zum Erreichen eines im Spaltmaß im wesentlichen konstanten Luftspalts die Kontur des Ständers gegengleich in die Permanentmagnet-Elemente eingearbeitet sein.

Ein Läufer einer permanentmagneterregten elektrischen Maschine hat eine Läuferglocke. Diese Läuferglocke hat mehrere Lagen Harz-Faserverbundwerkstoff, und ist ein integraler Körper, der ein Läuferrohr und einen Läuferboden hat. Die Läuferglocke hat im Bereich des Läuferbodens wenigstens ein Filamentbündel, das vom Zentrum des Läuferbodens im wesentlichen entlang gedachter Radien oder Sekanten über den Außenrand des Läuferbodens reicht; und das wenigstens eine Filamentbündel ist am Außenrand des Läuferbodens abgewinkelt und geht ununterbrochen in das Läuferrohr in axialer Richtung und/oder unter einem Winkel zur Mittellängsachse des Läuferrohres bis zu dessen freiem Randbereich über. Der Läuferboden der Läuferglocke hat eine etwa kreisrunde oder polygonale Gestalt an seinem Außenumfang und ist als Polygonscheibe, als Kreisscheibe, oder Polygonscheibenring oder als Kreisscheibenring ausgestaltet. Das Läuferrohr der Läuferglocke kann eine der Gestalt des Läuferbodens ähnliche, etwa kreisrunde oder polygonale Querschnittgestalt haben und/oder das wenigstens eine Filamentbündel kann schraubenförmig gewickelte Filamente oder ringförmiges Fasergeflecht haben. Der Läuferboden kann wenigstens ein auf gedachten Sekanten oder Radien liegendes, im wesentlichen parallel verlaufendes Filamentbündel haben, von dem wenigstens eines der Enden über den Außenrand des Läuferbodens reicht, am Außenrand des Läuferbodens abgewinkelt ist und ohne Unterbrechung in das Läuferrohr übergehen. Die Läuferglocke kann eine ungleichförmige Wanddicke haben und/oder vollständig aus Harz-Faserverbundwerkstoff gebildet sein. Die Läuferglocke trägt an ihrer Innenseite oder an ihrer Außenseite des Läuferrohrs Permanentmagnet-Elemente, die in den Faserverbundwerkstoff eingebettet sind. Die Läuferglocke ist aus dem wenigstens einen Filamentbündel gebildet, das sich lagenweise zumindest teilweise überdeckend angeordnet ist.

### Kurzbeschreibung der Zeichnung

Weitere Merkmale, Eigenschaften, Vorteile und mögliche Abwandlungen werden für einen Fachmann anhand der nachstehenden Beschreibung verdeutlicht, in der auf die beigefügte Zeichnung Bezug genommen ist.

In Fig. 1 ist eine seitliche schematische Ansicht eines Längsschnittes durch eine Ausführungsform einer permanentmagneterregten elektrischen Maschine veranschaulicht.

In Fig. 2 ist eine schematische perspektivische Seitensicht auf eine Läuferglocke veranschaulicht.

In Fig. 3 ist eine schematische Draufsicht auf eine Läuferglocke nach Fig. 2 veranschaulicht.

In Fig. 3a ist eine schematische Draufsicht auf eine Variante einer Läuferglocke nach Fig. 2 veranschaulicht.

In den Fig. 4 bis 6 ist der Vorgang zur gleichzeitigen Herstellung zweier Läuferglocken nach Fig. 2 veranschaulicht.

In Fig. 7 ist eine Querschnittansicht durch einen Läufer mit eingeformten Permanentmagnet-Elementen veranschaulicht.

In Fig. 8 ist eine Längsschnittansicht durch einen Läufer mit eingeformten Permanentmagnet-Elementen veranschaulicht.

### Detaillierte Beschreibung bevorzugter Ausführungsformen

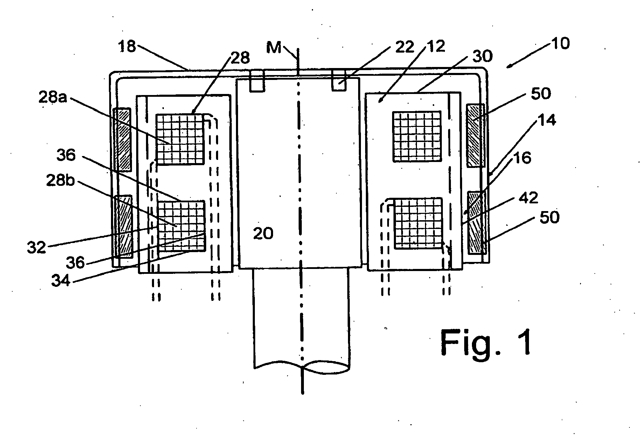

In Fig. 1 ist ein Längsschnitt durch eine Ausführungsform einer permanent erregten elektrischen Maschine 10 in der Ausgestaltung als Außenläufermaschine gezeigt. Das veranschaulichte und nachstehend erläuterte Konzept ist jedoch auch für eine Innenläufermaschine einsetzbar. Die elektrische Maschine 10 hat einen Ständer 12 und einen Läufer 14. Zwischen dem Läufer 14 und dem Ständer 12 ist ein Luftspalt 16 gebildet. Der Ständer 12 ist - durch den Luftspalt 16 getrennt - von dem glockenförmigen Läufer 14 umgeben, der an seiner einen Stirnfläche einen Läuferboden 18 mit einer Öffnung 18a aufweist, in der eine nicht Abtriebswelle 20 mit dem Läufer 14 drehfest verbunden ist. Die Lagerung des Läufers 14 mittels geeigneter Kugel- oder Rollenlager ist ebenfalls nicht weiter veranschaulicht.

Der Ständer 12 hat eine Spulenanordnung 28 mit zwei hohlzylindrischen Wicklungen 28a, 28b, die koaxial zur Mittellängsachse M der Transversalflussmaschine 10 angeordnet ist. Jede der hohlzylindrischen Wicklungen 28a, 28b ist aus im Querschnitt im Wesentlichen rechteckigem Bandmaterial gewickelt und hat eine innere und eine äußere Mantelfläche 30, 32 sowie eine untere und eine obere Stirnfläche 34, 36. Diese hohlzylindrischen Wicklungen 28a, 28b sind in dem Ständer 12 aufgenommen. Der Ständer 12 ist in der vorliegende Ausführungsform mehrteilig aufgebaut, kann aber auch einstückig gestaltet sein. Dazu ist die/ jede Wicklung 28a, 28b der Spulenanordnung 28 von Schalenteilen eingefasst, die als Magnetfluss-Joch 30 wirken. Jedes Magnetfluss-Joch 30 hat an seiner dem Läufer zugewandteri Flanke eine Vielzahl von Zähnen 42, die parallel zur Mittellängsachse M orientiert sind. Damit sind die Zähne 42 der Magnetfluss-Joche 30 bei einer Ihnenläufer-Maschine an der innenliegenden Mantelfläche der hohlzylindrischen Wicklungen angeordnet und bei einer Außenläufer-Maschine (wie das vorliegend gezeigte Beispiel) an der außenliegenden Mantelfläche der hohlzylindrischen Wicklungen 28a, 28b.

Von den Zähnen 42 um den Luftspalt 16 in radialer Richtung beabstandet, sind an dem Läufer 14 Permanentmagnet-Elemente 50 angeordnet, deren magnetische Orientierung zu dem Luftspalt 16 hin jeweils abwechselnd ist. Dies ist durch die abwechselnden Polungen mit den unterschiedlichen Schraffuren veranschaulicht. In bestimmten Positionen des Läufers 14 relativ zum Ständer 12 fluchten die Permanentmagnet-Elemente 50 einer axialen Reihe des Läufers 14 mit Zähnen 42 einer axialen Reihe des Ständers 12.

Wie in Fig. 1 veranschaulicht, haben die Permanentmagnet-Elemente 50 eine Gestalt, die im wesentlichen mit der Gestalt der Zähne 42 übereinstimmt; sie können also in ihrer den Zähnen zugewandten Seitenfläche rechteckig, trapez- oder dreieck-, bzw. rautenförmig, oder dergl. sein. Entlang des (Innen-)Umfangs der Läuferglocke 14 zueinander benachbarte Permanentmagnet-Elemente 50 haben ebenfalls eine unterschiedliche magnetische Orientierung. Hieraus resultiert eine schachbrettartig sich abwechselnde Anordnung von gegensätzlich orientierten Permanentmagnet-Elementen 50.

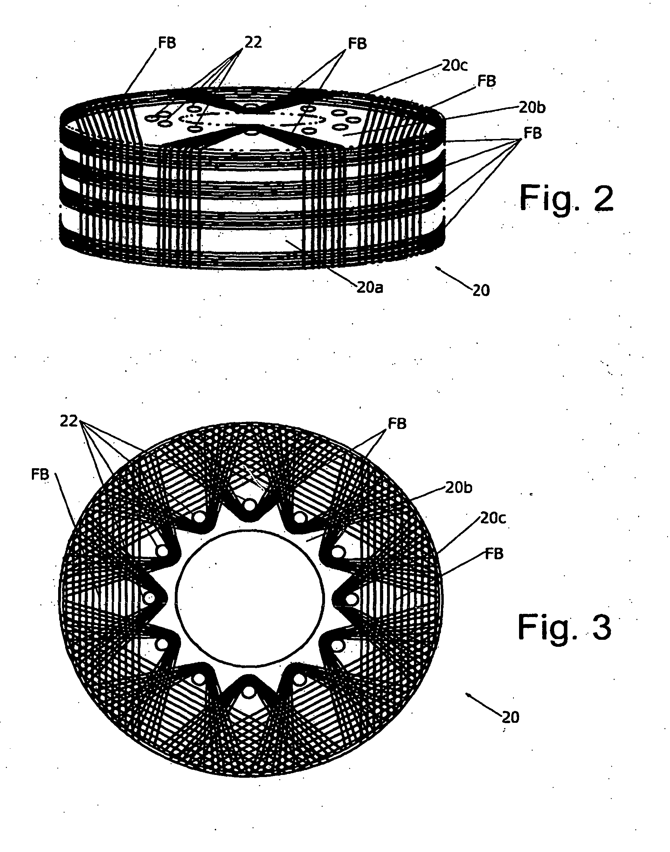

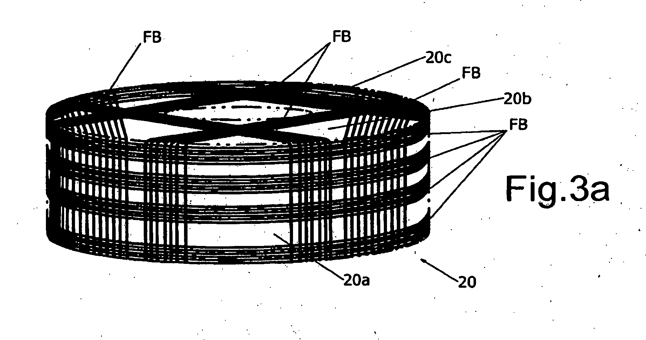

Der Läufer 14 hat eine Läuferglocke 20, die mehrere Lagen Harz-Faserverbundwerkstoff aufweist. Wesentlich ist herbei, dass sie ein integraler Körper aus einem Läuferrohr 20a und einen Läuferboden 20b ist (siehe Fig. 2, 3). Im Bereich des Läuferrohres 20a hat die Läuferglocke 20 in Umfangsrichtung des Läuferrohres 20b orientierte ringförmige Filamentbündel FB. In der Fig. 2 ist hiervon der besseren Anschaulichkeit halber nur ein Teil gezeigt. Im Bereich des Läuferbodens 20a der Läuferglocke 20 ist das Filamentbündel FB fächerartig verlegt. Es reicht vom Zentrum des Läuferbodens 20b im wesentlichen entlang gedachter Radien oder Sekanten über den Außenrand 20c des Läuferbodens 20b; Am Außenrand des Läuferbodens 20a ist das Filamentbündel FB abgewinkelt und geht ohne Unterbrechung in das Läuferrohr 20a über. In der Fig. 2 ist hiervon der besseren Anschaulichkeit halber ebenfalls nur ein Teil gezeigt. Das Filamentbündel FB hat zum Beispiel zwischen zwei und 50, z.B. etwa 20 einzelne Fasern und ist in etwa symmetrisch um Schraubengewinde, Zapfen oder Gewindehülsen 22 gelegt, die im oder nahe dem Zentrum des Läuferbodens 20b angeordnet sind. Die fächerförmige Gestalt entsteht dadurch, dass dieses Filamentbündel FB an jedem der Befestigungselemente abgeknickt und unter einem Winkel von etwa 70° bis etwa 110° weitergeführt ist. Der so gebildete Läuferboden 20a der Läuferglocke 20 hat eine etwa kreisrunde Gestalt an seinem Außenrand 20c und ist als Kreisscheibe ausgestaltet.

Die in Fig. 3a veranschaulichte Variante hat keine Gewindehülsen 22; vielmehr wird bei dieser Ausgestaltung das Filamentbündel FB nahe des Zentrums entlang von Sekanten über den Läuferboden gewickelt, am Übergang in das Läuferrohr abgewinkelt, wo es ebenfalls ohne Unterbrechung in das Läuferrohr 20a übergeht. Die Befestigungseinrichtungen für die Maschinenwelle können sowohl bei der Variante nach Fig. 3a, als auch bei der Variante nach Fig. 3 nachträglich eingebracht werden.

Das Läuferrohr 20b der Läuferglocke 20 hat einen der Gestalt des Läuferbodens 20a ähnlichen, etwa kreisrunden Querschnitt. Das Filamentbündel FB hat schraubenförmig gewickelte Glasfilamente. Dies erlaubt eine kraft- und momentengerechte Gestalt der Läuferglocke.

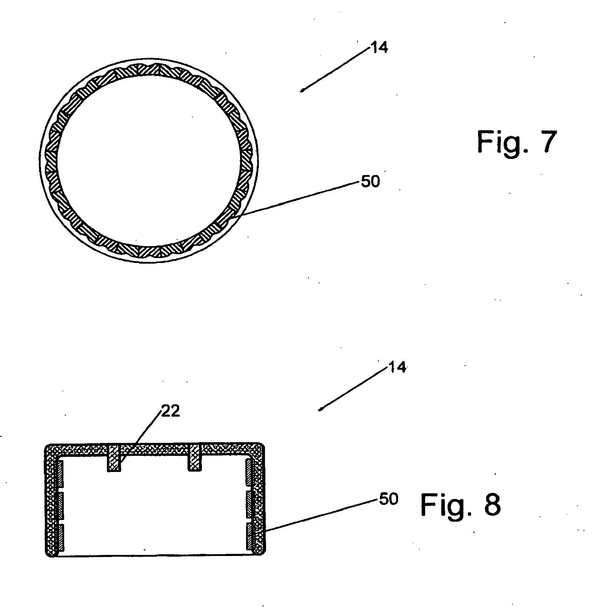

Die Läuferglocke 20 hat eine von der Dicke des Faserverbunds abhängige, ungleichförmige Wanddicke und ist vollständig aus Harz-Faserverbundwerkstoff gebildet. Die Läuferglocke 20 hat an ihrer Innenseite (siehe Fig. 7, 8) oder an ihrer Außenseite des Läuferrohrs 20b Permanentmagnet-Elemente 50, die in den Harz-Faserverbundwerkstoff eingebettet sind.

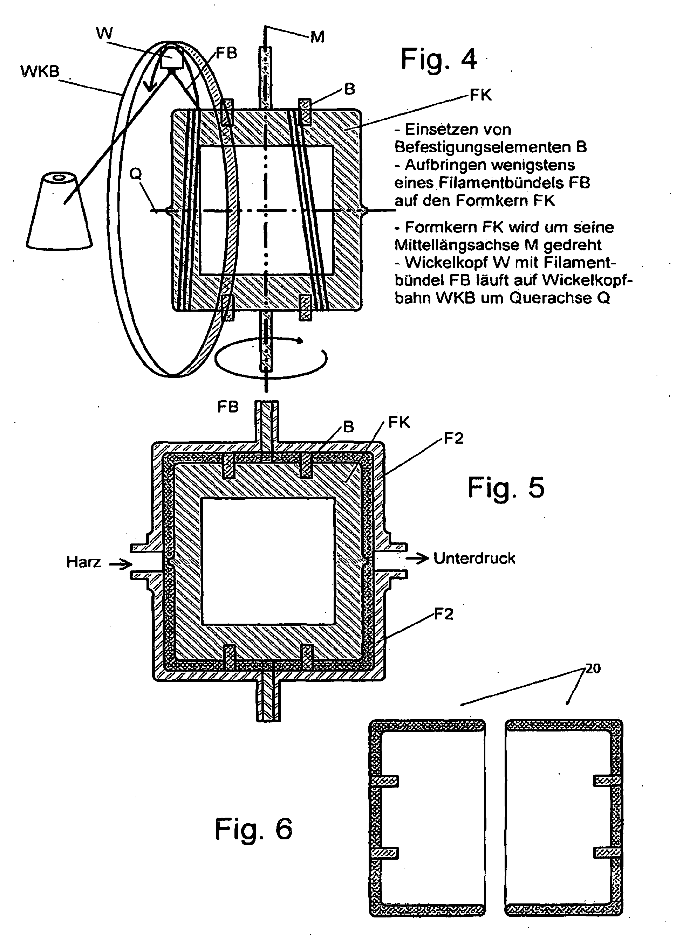

Ein Verfahren zur Herstellung wenigstens zweier solcher Läuferglocken einer permanentmagneterregten elektrischen Maschine hat folgende Schritte: Bereitstellen eines mehrteiligen Formwerkzeuges mit einem Formkern, der einen ersten und einen zweiten Formboden und einen zylindrischen Zwischenteil hat (siehe Fig. 4). In der vorliegend gezeigten Variante ist der Formkern einteilig. Aufbringen von wenigstens einem Filamentbündel FB auf den Formkern, indem das Filamentbündel FB sich lagenweise teilweise überdeckt. So werden zwei Läuferglocken gebildet, die in der Mitte des zylindrischen Zwischenteils mit ihren beiderseitigen Randbereichen aneinander angrenzen. Das Filamentbündel FB wird als Endlosware ununterbrochen über den ersten Formboden entlang des zylindrischen Zwischenteils und über den zweiten Formboden gewickelt. Dabei reicht das Filamentbündel vom Zentrum / nahe dem Zentrum des ersten Formbodens im Wesentlichen entlang gedachter Radien oder Sekanten über den Außenrand des ersten Formbodens. Am Außenrand des ersten Formbodens ist das Filamentbündel abgewinkelt und ununterbrochen entlang des zylindrischen Zwischenteils des Formkerns unter einem Winkel zur Mittellängsachse M des Formkerns bis über den zweiten Formboden geschlungen. Dieser Vorgang wird so lange wiederholt, wobei einerseits der Formkern um seine Mittellängsachse M gedreht wird und andererseits ein das Filamentbündel FB zuführender Wickelkopf entlang einer ovalen oder kreisförmigen Wickelkopfbahn WKB um eine Querachse Q des Formkerns umläuft, bis der Faserkörper komplett ist. Durch gezieltes Zusammenwirken dieser beiden einander überlagerten Bewegungen entsteht ein Faserkörper, der die Läuferböden und die Läuferrohre der beiden Läuferglocken bildet. Das Filamentbündel wird bei der veranschaulichten Variante nach dem Aufbringen auf den Formkern mit Harz getränkt wird. Dazu werden zwei Schalenteile F2 des mehrteiligen Formwerkzeuges über den Formkern FK geschoben, wobei sich eine Kavität bildet, in der der Faserkörper sich befindet Anschließend wird unter Einwirkung von Unterdruck Harz in die Kavität mit dem Faserkörper injiziert (siehe Fig. 5). Nach dem Aushärten des aus dem Filamentbündel FB und dem Harz gebildeten Faserverbundkörpers erfolgt das Durchtrennen des Faserverbundkörpers quer zur Mittellängsachse M des zylindrischen Zwischenteils des Formkerns FK. So werden zwei separate Läuferglocken erhalten. In einem letzten Schritt werden die beiden separaten Läuferglocken von dem Formkern entformt. (siehe Fig. 6)

In einer nicht im Detail veranschaulichten Verfahrensvariante können zur Herstellung eines Läufers auch mehrere die Filamentbündel FB zuführende Wickelköpfe vorgesehen sein. Damit wird nicht zuletzt die Herstellungszeit verringert und die Wirtschaftlichkeit des Verfahrens erhöht.

In einer weiteren nicht im Detail veranschaulichten Verfahrensvariante können zur Herstellung eines Läufers einer Außenläufermaschine Permanentmagnet-Elemente auf den Formkern vor dem Aufbringen des Filamentbündels FB auf den Formkern aufgebracht werden. Zur Herstellung eines Läufers einer Innenläufermaschine können auf die Formschalen vor dem Einbringen des Formkerns mit dem darauf aufgebrachten wenigstens einen Filamentbündel in die Formschalen Permanentmagnet-Elemente eingebracht werden.

Dabei können die Permanentmagnet-Elemente 50 an ihrer von dem Luftspalt abgewandten Seite (also mit der Seitenfläche, mit der sie in dem Harz-Faserverbund aufgenommen sind, konturiert sein, zum Beispiel gewellt oder mit stufenförmigen Aussparungen versehen (siehe Fig. 7, 8). Dies erhöht die Festigkeit der Gesamtanordnung. Außerdem können die Permanentmagnet-Elemente 50 durch einen Positionierring in Umfangs- und Längsrichtung des Läuferrohrs festgelegt werden, bevor der Faserverbund aufgebracht wird. Bei quaderförmigen Permanentmagnet-Elementen 50 gibt es Bereiche auf der vom Luftspalt abliegenden Seite sowie in den dem Luftspalt zugewandten Rändern der Permanentmagnet-Elemente 50, die keinen oder nur wenig magnetischen Fluss tragen. Demgegenüber ermöglichen die konturierten Seitenflächen mit Stellen stufenförmiger Aussparungen die lagerichtige Zuführung und Positionierung der Magnete im Läufer, und erlauben eine Optimierung der Magnetgeometrie ohne nennenswerte Einbußen beim Maschinendrehmoment. Die geometrische Gestalt der konturierten Permanentmagnet-Elemente erlaubt außerdem die Identifizierung und Positionierung der Magnete im Läufer. Da es sich um prismatische Geometrien handelt, ist nicht mit einer höheren Komplexität der Formwerkzeuge zu rechnen. Die Reduzierung der Magnetmasse bei den hier vorgestellten Läufervarianten ohne gleichzeitige Reduktion des Maschinendrehmoments senkt die Kosten für Seltenerdmagnete. Außerdem reduzieren sich die Läufermasse und das Massenträgheitsmoment des Läufers. Schließlich ergibt sich die Möglichkeit einer mechanischen und optischen Lageerkennung und somit einer automatisierten Positionierung der Magneten in der Läuferglocke.

Die vorangehend beschriebenen Varianten und deren Herstellung dienen lediglich dem besseren Verständnis der Struktur, der Funktionsweise und der Eigenschaften der vorgestellten Lösung; sie schränken die Offenbarung nicht etwa auf die Ausführungsbeispiele ein. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen.

Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Lösung zuzuschreiben sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst.

Die vorstehend erläuterten Erzeugnis- und Verfahrensdetails sind zwar im Zusammenhang dargestellt; es sei jedoch darauf hingewiesen, dass sie auch unabhängig voneinander sind und auch frei miteinander kombinierbar sind. Die in den Fig. gezeigten Verhältnisse der einzelnen Teile und Abschnitte hiervon zueinander und deren Abmessungen und Proportionen sind nicht einschränkend zu verstehen. Vielmehr können einzelne Abmessungen und Proportionen auch von den gezeigten abweichen.

Auch die Ansprüche limitieren nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen hier offenbart.

## Patentansprüche

1. Permanentmagneterregte elektrische Maschine (10) mit einem Ständer (12) und einem Läufer (14), wobei'
- der Ständer (12) eine Spulenanordnung (28) aufweist und der Läufer (14) mit Permanentmagnet-Elementen (50) versehen ist,
- zwischen dem Ständer (12) und dem Läufer (14) ein Luftspalt (16) gebildet ist, der von den Permanentmagnet-Elementen (50) und mit auf diese in bestimmten Positionen ausgerichteten magnetisch leitenden Zähnen (42) des Ständers (12) begrenzt ist, wobei
- der Läufer (14) eine Läuferglocke (20) aufweist, die
o mehrere Lagen Harz-Faserverbundwerkstoff aufweist,
o ein integraler Körper ist, der ein Läuferrohr (20a) und einen Läuferboden (20b) aufweist, und im oder nahe dem Zentrum des Läuferbodens (20b) Befestigungselemente in Form von Schraubengewinden, Zapfen oder Gewindehülsen angeordnet sind, um die Läuferglocke (20) mit einer Maschinenwelle zu koppeln, und
o im Bereich des Läuferbodens (20b) wenigstens ein Filamentbündel (FB) aufweist, wobei das wenigstens eine Filamentbündel (FB)
- jeweils in etwa symmetrisch um ein Befestigungselement (22) gelegt ist, wobei das Filamentbündel (FB) an dem Befestigungselement (22) abgeknickt und unter einem Winkel von etwa 70° bis etwa 110° weitergeführt ist,
- vom Zentrum des Läuferbodens (20b) im Wesentlichen entlang gedachter Radien oder Sekanten über den Außenrand (20c) des Läuferbodens (20b) reicht, und
- am Außenrand (20c) des Läuferbodens (20b) abgewinkelt ist und ununterbrochen in das Läuferrohr (20a) in axialer Richtung und/oder unter einem Winkel zur Mittellängsachse des Läuferrohres (20a) bis zu dessen freiem Randbereich übergeht, wobei
- im Bereich des Läuferrohres (20a) wenigstens ein in Umfangsrichtung des Läuferrohres (20a) liegendes schraubenförmiges Filamentbündel (FB) angeordnet ist, und
- wobei die Läuferglocke an der Innenseite oder an der Außenseite des Läuferrohrs (20a) die Permanentmagnet-Elemente (50) trägt, die in den Harz-Faserverbundwerkstoff eingebettet sind.

2. Permanentmagneterregte elektrische Maschine (10) nach Anspruch 1, wobei
- das wenigstens eine Filamentbündel (FB) des Läufers (14) in etwa symmetrisch im oder nahe dem Zentrum des Läuferbodens (20b) längs gedachter Sekanten angeordnet ist.

3. Permanentmagneterregte elektrische Maschine (10) nach einem der vorhergehenden Vorrichtungsansprüche, wobei der Läuferboden (20b) auf gedachten Sekanten oder Radien liegende im Wesentlichen parallel verlaufende Filamentbündel (FB) aufweist, von denen wenigstens eines der Enden über den Außenrand (20c) des Läuferbodens (20b) reicht, am Außenrand des Läuferbodens (20b) abgewinkelt ist und in das Läuferrohr (20a) übergeht.

4. Permanentmagneterregte elektrische Maschine (10) nach einem der vorhergehenden Vorrichtungsansprüche, wobei
- die Läuferglocke (20) eine ungleichförmige Wanddicke hat und/ oder vollständig aus Harz-Faserverbundwerkstoff gebildet ist, und/oder
- die Läuferglocke (20)an ihrer Innenseite oder an ihrer Außenseite des Läuferrohrs (20a) Permanentmagnet-Elemente (50) trägt, die in den Harz-Faserverbundwerkstoff eingebettet sind, und/oder
- die Läuferglocke (20) aus
(i) wenigstens einem schraubenförmig gewickelten Filamentbündel (FB), Fasergeflecht oder Faserflies, und/oder
(ii) wenigstens einem im Wesentlichen parallel verlaufenden Filamentbündel (FB)
gebildet ist, das sich lagenweise zumindest teilweise überdeckend angeordnet ist.

5. Permanentmagneterregte elektrische Maschine (10) nach einem der vorhergehenden Vorrichtungsansprüche, wobei
- die Läuferglocke (20) an ihrer dem Luftspalt (16) zugewandten Seite die in dem Harz-Faserverbund eingebetteten Permanentmagnet-Elemente (50) trägt, die an den Stellen, an denen sie weniger als 90% des durch das jeweilige Permanentmagnet-Element maximal fließenden magnetischen Flusses tragen, konturiert sind; und/oder
- die Permanentmagnet-Elemente (50) auf ihrer vom Luftspalt abliegenden Seite und/oder an ihren dem Luftspalt zugewandten Rändern konturiert, gewellt oder mit stufenförmigen Aussparungen versehen sind.

6. Verfahren zur Herstellung wenigstens zweier Läuferglocken einer permanentmagneterregten elektrischen Maschine nach einem der vorhergehenden Vorrichtungsansprüche, mit den Schritten:
- Bereitstellen eines Formkerns mit einem ersten und einem zweiten Formboden und einem zylindrischen Zwischenteil eines mehrteiligen Formwerkzeuges; Sich lagenweise zumindest teilweise überdeckendes Aufbringen von wenigstens einem Filamentbündel (FB) auf den Formkern, um zwei in ihren Randbereichen aneinander angrenzende Läuferglocken zu bilden, indem das wenigstens eine Filamentbündel (FB) ununterbrochen über den ersten Formboden entlang des zylindrischen Zwischenteils und über den zweiten Formboden gewickelt wird, wobei das wenigstens eine Filamentbündel (FB) vom Zentrum des ersten Formbodens im Wesentlichen entlang gedachter Radien oder Sekanten über den Außenrand des ersten Formbodens reicht, und das wenigstens eine Filamentbündel (FB) am Außenrand des ersten Formbodens abgewinkelt ist und ununterbrochen entlang des zylindrischen Zwischenteils des Formkerns in axialer Richtung und/oder unter einem Winkel zur Mittellängsachse (M) des zylindrischen Zwischenteils bis über den zweiten Formboden, reicht; wodurch
o ein integraler Körper gebildet wird, der zwei gegengleich Läuferglocken verkörpert, von denen jede ein Läuferrohr (20a) und einen Läuferboden (20b) aufweist, bei denen im oder nahe dem Zentrum des Läuferbodens (20b) Befestigungselemente in Form von Schraubengewinden, Zapfen oder Gewindehülsen angeordnet sind, um die Läuferglocke (20) mit einer Maschinenwelle zu koppeln, und die
o im Bereich jedes Läuferbodens (20b) wenigstens ein Filamentbündel (FB) aufweisen, wobei das wenigstens eine Filamentbündel (FB)
- jeweils in etwa symmetrisch um ein Befestigungselement (22) gelegt ist, wobei das Filamentbündel (FB) an dem Befestigungselement (22) abgeknickt und unter einem Winkel von etwa 70° bis etwa 110° weitergeführt ist, und wobei
- im Bereich des Läuferrohres (20a) wenigstens ein in Umfangsrichtung des Läuferrohres (20a) liegendes schraubenförmiges Filamentbündel (FB) angeordnet ist,
- Aushärten des aus dem wenigstens einen Filamentbündel (FB) und dem Harz gebildeten Faserverbundkörpers; und
- Durchtrennen des Faserverbundkörpers quer zur Mittellängsachse des zylindrischen Zwischenteils um zwei separate Läuferglocken zu erhalten, und
- Entformen der zwei separaten Läuferglocken von dem Formkern.

7. Verfahren zur Herstellung wenigstens zweier Läuferglocken einer permanentmagneterregten elektrischen Maschine nach dem vorhergehenden Verfahrensanspruch, wobei
- das wenigstens eine Filamentbündel (FB) vor oder beim oder nach Aufbringen auf den Formkern mit Harz getränkt wird, und/oder
- das wenigstens eine Filamentbündel (FB) vor oder beim oder nach dem Tränken mit Harz unter Zugspannung gesetzt wird.

8. Verfahren zur Herstellung wenigstens zweier Läuferglocken einer permanentmagneterregten elektrischen Maschine nach einem dem vorhergehenden Verfahrensansprüche, wobei das wenigstens eine Filamentbündel (FB) als endloses Filamentbündel (FB) mehrfach um den ersten und den zweiten Formboden sowie den zylindrischen Zwischenteil geschlungen wird, wobei der Formkern kontinuierlich oder unterbrochen um seine Mittellängsachse gedreht wird, und/oder wenigstens ein das wenigstens eine Filamentbündel (FB) zum Formkern zuführender Wickelkopf im Wesentlichen parallel oder unter einem spitzen Winkel zur Mittellängsachse des Formkerns hin- und her verschoben wird.

9. Verfahren zur Herstellung wenigstens zweier Läuferglocken einer permanentmagneterregten elektrischen Maschine nach einem dem vorhergehenden Verfahrensansprüche mit den Schritten:
- Einbringen des Formkerns mit dem darauf aufgebrachten wenigstens einen Filamentbündel (FB) in wenigstens eine Formschale des Formwerkzeuges, so dass eine Kavität gebildet ist, in der sich das wenigstens eine Filamentbündel (FB) befindet,
- Abdichten der Kavität des Formwerkzeuges,
- Injizieren von Harz in die Kavität des Formwerkzeuges,
- Aushärten der aus dem wenigstens einen Filamentbündel (FB) und dem injizierten Harz gebildeten wenigstens zwei Läuferglocken, und
- Entformen der wenigstens zwei Läuferglocken aus der Kavität.

10. Verfahren nach dem vorhergehenden Verfahrensanspruch zur Herstellung einer Läuferglocke einer permanentmagneterregten elektrischen Maschine nach einem der vorhergehenden Vorrichtungsansprüche, mit den Schritten:
lagenweise abwechselnd einander zumindest teilweise überdeckendes Aufschichten
(i) des wenigstens einen Filamentbündels (FB) als schraubenförmiger Wickelkörper, aus Filamenten oder ringförmigem Fasergeflecht, und/oder
(ii) wenigstens eines im Wesentlichen parallel verlaufenden Filamentbündels auf den Formkern oder auf die wenigstens eine Formschale, um die Läuferböden (20) und/oder die Läuferrohre der beiden Läuferglocken zu bilden.

11. Verfahren nach dem vorhergehenden Verfahrensanspruch zur Herstellung einer Läuferglocke einer permanentmagneterregten elektrischen Maschine nach einem der vorhergehenden Vorrichtungsansprüche, mit den Schritten:
- Aufbringen von Permanentmagnet-Elementen auf den Formkern vor dem Aufbringen des wenigstens einen Filamentbündels auf den Formkern oder auf die Formschale vor dem Einbringen des Formkerns mit dem darauf aufgebrachten des wenigstens einen Filamentbündels in die Formschale.

12. Verfahren nach dem vorhergehenden Verfahrensanspruch zur Herstellung einer Läuferglocke einer permanentmagneterregten elektrischen Maschine nach einem der vorhergehenden Vorrichtungsansprüche, mit den Schritten:
Aufbringen der Permanentmagnet-Elemente im Fall einer Außenläufermaschine auf den ferromagnetischen Formkern vor dem Aufbringen des wenigstens einen Filamentbündels und / oder Aufbringen der Permanentmagnet-Elemente im Fall einer Innenläufermaschine auf die Formschale vor dem Einbringen des Formkerns mit dem darauf aufgebrachten des wenigstens einen Filamentbündels in die Formschale, wobei die Permanentmagnet-Elemente aufgrund ihrer magnetischen Anziehungskraft stabil auf dem Formkernbzw. der Formschale positioniert bleiben oder bei unmagnetisierten Magneten die Haltekraft durch Permanentmagnet-Elemente, Elektromagnete oder Vakuum auf dem Formkern bzw. der Formschale fixiert wird, und wobei die Magnete einlaminiert werden.

13. Läufer (14) einer permanentmagneterregten elektrischen Maschine mit den Merkmalen eines der vorhergehenden Vorrichtungsansprüche, der eine Läuferglocke (20) aufweist, die
o mehrere Lagen Harz-Faserverbundwerkstoff aufweist,
o ein integraler Körper ist, der ein Läuferrohr und einen Läuferboden aufweist, und; wobei im oder nahe dem Zentrum des Läuferbodens (20b) Befestigungselemente in Form von Schraubengewinden, Zapfen oder Gewindehülsen angeordnet sind, um die Läuferglocke (20) mit einer Maschinenwelle zu koppeln, und
o im Bereich des Läuferbodens (20b) wenigstens ein Filamentbündel (FB) aufweist, das
• jeweils in etwa symmetrisch um ein Befestigungselement (22) gelegt ist, wobei das Filamentbündel (FB) an dem Befestigungselement (22) abgeknickt und unter einem Winkel von etwa 70° bis etwa 110° weitergeführt ist,
- vom Zentrum des Läuferbodens (20b) im Wesentlichen entlang gedachter Radien oder Sekanten über den Außenrand (20c) des Läuferbodens (20b) reicht; und
- das wenigstens eine Filamentbündel (FB) am Außenrand (20c) des Läuferbodens (20b) abgewinkelt ist und ununterbrochen in das Läuferrohr (20a) in axialer Richtung und/oder unter einem Winkel zur Mittellängsachse des Läuferrohres (20a) bis zu dessen freiem Randbereich übergeht; wobei
- im Bereich des Läuferrohres (20a) wenigstens ein in Umfangsrichtung des Läuferrohres (20a) liegendes schraubenförmiges Filamentbündel (FB) angeordnet ist, und
o wobei der Läuferboden der Läuferglocke eine etwa kreisrunde oder polygonale Gestalt an seinem Außenumfang hat und als Polygonscheibe, als Kreisscheibe, oder Polygonscheibenring oder als Kreisscheibenring ausgestaltet ist, und/oder
o wobei das Läuferrohr der Läuferglocke eine der Gestalt des Läuferbodens ähnliche, etwa kreisrunde oder polygonale Querschnittgestalt aufweist und/oder die schraubenförmig gewickelte Filamente aufweist, und/oder
o wobei der Läuferboden auf gedachten Sekanten oder Radien liegende im Wesentlichen parallel verlaufende Filamentbündel aufweist, von denen wenigstens eines der Enden über den Außenrand des Läuferbodens reicht, am Außenrand des Läuferbodens abgewinkelt ist und in das Läuferrohr übergeht, und/oder
o wobei die Läuferglocke eine ungleichförmige Wanddicke hat und/oder vollständig aus Harz-Faserverbundwerkstoff gebildet ist, und/oder
o wobei die Läuferglocke an ihrer Innenseite oder an ihrer Außenseite des Läuferrohrs Permanentmagnet-Elemente trägt, die in den Faserverbundwerkstoff eingebettet sind, und/oder
wobei die Läuferglocke aus dem wenigstens einen Filamentbündel (FB) gebildet ist, das sich lagenweise zumindest teilweise überdeckend angeordnet ist.

## Claims

1. A permanent-magnet excited electric machine (10) having a stator (12) and a rotor (14), wherein
- the stator (12) comprises a coil arrangement (28) and the rotor (14) is provided with permanent-magnet elements (50),
- an air gap (16) is formed between the stator (12) and the rotor (14), which is defined by the permanent-magnet elements (50) and magnetically conductive teeth (42) of the stator (12) oriented towards said permanent-magnet elements in specific positions, wherein
- the rotor (14) comprises a rotor bell (20), which
o comprises multiple layers of resin-fiber composite,
o is an integral body comprising a rotor pipe (20a) and a rotor bottom (20b), wherein fastening elements in the form of screw threads, pins or threaded sleeves are arranged in or near the center of the rotor bottom (20b) for coupling the rotor bell (20) to a machine shaft, and
∘ comprises at least one filament bundle (FB) in the region of the rotor bottom (20b), wherein the at least one filament bundle (FB)
- is placed approximately symmetrically around a fastening element (22) in each case, wherein the filament bundle (FB) is bent at the fastening element (22) and is continued at an angle of approximately 70° to approximately 110°,
- reaches from the center of the rotor bottom (20b) substantially along imaginary radii or secants over the outer edge (20c) of the rotor bottom (20b), and
- is angled at the outer edge (20c) of the rotor bottom (20b) and uninterruptedly passes into the rotor pipe (20a) in an axial direction and/or at an angle to the central longitudinal axis of the rotor pipe (20a) up to the free edge region thereof, wherein
- at least one helical filament bundle (FB) lying in a circumferential direction of the rotor pipe (20a) is arranged in the region of the rotor pipe (20a), and
- wherein the rotor bell supports the permanent-magnet elements (50) at the inner surface or outer surface of the rotor pipe (20a), which permanent-magnet elements are embedded in the resin-fiber composite.

2. The permanent-magnet excited electric machine (10) according to claim 1, wherein
- the at least one filament bundle (FB) of the rotor (14) is arranged approximately symmetrically in or near the center of the rotor bottom (20b) along imaginary secants.

3. The permanent-magnet excited electric machine (10) according to any one of the preceding apparatus claims, wherein the rotor bottom (20b) comprises substantially parallel filament bundles (FB) lying on imaginary secants or radii, wherein at least one of the ends thereof reaches over the outer edge (20c) of the rotor bottom (20b), is angled at the outer edge of the rotor bottom (20b) and passes into the rotor pipe (20a).

4. The permanent-magnet excited electric machine (10) according to any one of the preceding apparatus claims, wherein
- the rotor bell (20) has a non-uniform wall thickness and/or is completely formed of resin-fiber composite, and/or
- the rotor bell (20) supports permanent-magnet elements (50) at its inner surface or outer surface of the rotor pipe (20a), which permanent-magnet elements are embedded in the resin-fiber composite, and/or
- the rotor bell (20) is formed of
(i) at least one helically wound filament bundle (FB), fiber network or fibrous web, and/or
(ii) at least one substantially parallel fiber bundle (FB)
arranged in layers in an, at least in part, overlapping manner.

5. The permanent-magnet excited electric machine (10) according to any one of the preceding apparatus claims, wherein
- the rotor bell (20), at its side facing the air gap (16), supports the permanentmagnet elements (50) embedded in the resin-fiber composite, which are contoured in the positions, at which they carry less than 90 % of the maximum magnetic flux flowing through the respective permanent-magnet element; and/or
- the permanent-magnet elements (50) are contoured, corrugated or provided with stepped recesses on their sides facing away from the air gap and/or at their edges facing the air gap.

6. A method for manufacturing at least two rotor bells of a permanent-magnet excited electric machine according to any one of the preceding apparatus claims, comprising the steps:
- providing a mold core having a first and a second mold bottom and a cylindrical intermediate part of a multi-part mold; applying at least one filament bundle (FB) to the mold core in layers in an, at least in part, overlapping manner for forming two rotor bells contiguous to each other in their edge regions by winding the at least one filament bundle (FB) continuously over the first mold bottom along the cylindrical intermediate part and over the second mold bottom, wherein the at least one filament bundle (FB) reaches from the center of the first mold bottom substantially along imaginary radii or secants over the outer edge of the first mold bottom, and wherein the at least one filament bundle (FB) is angled at the outer edge of the first mold bottom and reaches uninterruptedly along the cylindrical intermediate part of the mold core in an axial direction and/or at an angle to the central longitudinal axis (M) of the cylindrical intermediate part over the second mold bottom, whereby
∘ an integral body is formed embodying two mirror-inverted rotor bells, each of which having a rotor pipe (20a) and a rotor bottom (20b), wherein fastening elements in the form of screw threads, pins or threaded sleeves are arranged in or near the center of the rotor bottom (20b) for coupling the rotor bell (20) to a machine shaft, and which
∘ comprise at least one filament bundle (FB) in the region of each rotor bottom (20b), wherein the at least one filament bundle (FB)
- is placed approximately symmetrically around a fastening element (22) in each case, wherein the filament bundle (FB) is bent at the fastening element (22) and is continued at an angle of approximately 70° to approximately 110°, and wherein
- at least one helical filament bundle (FB) lying in a circumferential direction of the rotor pipe (20a) is arranged in the region of the rotor pipe (20a),
- curing the fiber composite body formed of the at least one filament bundle (FB) and the resin, and
- severing the fiber composite body transversely to the central longitudinal axis of the cylindrical intermediate part for obtaining two separate rotor bells, and
- removing the two separate rotor bells from the mold core.

7. The method for manufacturing at least two rotor bells of a permanent-magnet excited electric machine according to the preceding method claim, wherein
- the at least one filament bundle (FB) is impregnated with resin before or during or after application to the mold core, and/or
- the at least one filament bundle (FB) is put under tensile stress before or during or after impregnation with resin.

8. The method for manufacturing at least two rotor bells of a permanent-magnet excited electric machine according to any one of the preceding method claims, wherein the at least one filament bundle (FB), as an endless filament bundle (FB), is wrapped repeatedly around the first and the second mold bottom and the cylindrical intermediate part, wherein the mold core is continuously or interruptedly rotated about its central longitudinal axis, and/or at least one winding head supplying the at least one filament bundle (FB) to the mold core is displaced back and forth substantially parallel to or at an acute angle to the central longitudinal axis of the mold core.

9. The method for manufacturing at least two rotor bells of a permanent-magnet excited electric machine according to any one of the preceding method claims, comprising the steps:
- inserting the mold core with the at least one filament bundle (FB) applied thereto into at least one mold shell of the mold so that a cavity is formed, in which the at least one filament bundle (FB) is located,
- sealing the cavity of the mold,
- injecting resin into the cavity of the mold,
- curing the at least two rotor bells formed of the at least one filament bundle (FB) and the injected resin, and
- removing the at least two rotor bells from the cavity.

10. The method according to the preceding method claim for manufacturing a rotor bell of a permanent-magnet excited electric machine according to any one of the preceding apparatus claims, comprising the steps:
- alternately laminating, in layers in an, at least in part, overlapping manner,
(i) the at least one filament bundle (FB) to form a helical winding body composed of filaments or annular fiber network, and/or
(ii) at least one substantially parallel filament bundle on the mold core or on the at least one mold shell for forming the rotor bottoms (20) and/or the rotor pipes of the two rotor bells.

11. The method according to the preceding method claim for manufacturing a rotor bell of a permanent-magnet excited electric machine according to any one of the preceding apparatus claims, comprising the steps:
- applying permanent-magnet elements to the mold core prior to applying the at least one filament bundle to the mold core or the mold shell prior to inserting the mold core with the at least one filament bundle applied thereto into the mold shell.

12. The method according to the preceding method claim for manufacturing a rotor bell of a permanent-magnet excited electric machine according to any one of the preceding apparatus claims, comprising the steps:
- applying the permanent-magnet elements, in the case of an external rotor machine, to the ferromagnetic mold core prior to applying the at least one filament bundle, and/or applying the permanent-magnet elements, in the case of an internal rotor machine, to the mold shell prior to inserting the mold core with the at least one filament bundle applied thereto into the mold shell, wherein the permanent-magnet elements remain stably positioned on the mold core or the mold shell due to their magnetic attraction, or wherein, in the case of unmagnetized magnets, the retaining force is fixed by permanent-magnet elements, solenoids or vacuum to the mold core or the mold shell, and wherein the magnets are laminated in.

13. A rotor (14) of a permanent-magnet excited electric machine having the features of any one of the preceding apparatus claims comprising a rotor bell (20), which
o comprises multiple layers of resin-fiber composite,
o is an integral body comprising a rotor pipe and a rotor bottom, wherein fastening elements in the form of screw threads, pins or threaded sleeves are arranged in or near the center of the rotor bottom (20b) for coupling the rotor bell (20) to a machine shaft, and
∘ comprises at least one filament bundle (FB) in the region of the rotor bottom (20b), which
- is placed approximately symmetrically around a fastening element (22) in each case, wherein the filament bundle (FB) is bent at the fastening element (22) and is continued at an angle of approximately 70° to approximately 110°,
- reaches from the center of the rotor bottom (20b) substantially along imaginary radii or secants over the outer edge (20c) of the rotor bottom (20b), and
- wherein the at least one filament bundle (FB) is angled at the outer edge (20c) of the rotor bottom (20b) and uninterruptedly passes into the rotor pipe (20a) in an axial direction and/or at an angle to the central longitudinal axis of the rotor pipe (20a) up to the free edge region thereof, wherein
- at least one helical filament bundle (FB) lying in a circumferential direction of the rotor pipe (20a) is arranged in the region of the rotor pipe (20a), and
∘ wherein the rotor bottom of the rotor bell is approximately circular or polygonal in shape at its outer periphery and is configured as a polygonal disk, circular disk, or polygonal disk ring, or circular disk ring, and/or
∘ wherein the rotor pipe of the rotor bell has an approximately circular or polygonal sectional shape similar to the shape of the rotor bottom and/or comprises helically wound filaments, and/or
∘ wherein the rotor bottom comprises substantially parallel filament bundles lying on imaginary secants or radii, wherein at least one of the ends thereof reaches over the outer edge of the rotor bottom, is angled at the outer edge of the rotor bottom and passes into the rotor pipe, and/or
∘ wherein the rotor bell has a non-uniform wall thickness and/or is completely formed of resin-fiber composite, and/or
∘ wherein the rotor bell supports permanent-magnet elements at its inner surface or outer surface of the rotor pipe, which permanent-magnet elements are embedded in the fiber composite, and/or
∘ wherein the rotor bell is formed of at least one filament bundle (FB) which is arranged in layers in an, at least in part, overlapping manner.

## Revendications

1. Moteur électrique (10) à excitation par aimants permanents, comportant un stator (12) et un rotor (14),
- ledit stator (12) présentant un agencement de bobines (28), et le rotor (14) étant pourvu de plusieurs éléments à aimants permanents (50),
- un entrefer (16) étant formé entre le stator (12) et le rotor (14), ledit entrefer étant délimité par les éléments à aimants permanents (50) et, alignées sur ceux-ci dans des positions déterminées, par des dents (42) magnétiquement conductrices du stator (12),
- ledit rotor (14) présentant une cloche de rotor (20), laquelle
o présente plusieurs couches de matériau composite résine-fibres,
o constitue un corps intégral présentant un tube de rotor (20a) et un fond de rotor (20b), et des éléments de fixation réalisés sous la forme de filets de vis, de tenons ou de douilles filetées et disposés à proximité ou au centre du fond de rotor (20b) pour coupler la cloche de rotor (20) à un arbre de machine, et
o présente dans la zone du fond de rotor (20b) au moins un faisceau de filaments (FB), ledit au moins un faisceau de filaments (FB)
- étant posé à chaque fois d'une manière plus ou moins symétrique autour d'un élément de fixation (22), ledit faisceau de filaments (FB) étant replié sur l'élément de fixation (22) et se prolongeant suivant un angle compris entre environ 70 et environ 110°,
- allant du centre du fond de rotor (20b) jusqu'au-dessus du bord extérieur (20c) du fond de rotor (20b), sensiblement le long de rayons ou de sécantes imaginaires, et
- étant coudé au niveau du bord extérieur (20c) du fond de rotor (20b) et se poursuivant de manière continue dans le tube de rotor (20a) dans le sens axial et/ou en formant un angle avec l'axe longitudinal médian du tube de rotor (20a) jusqu'à sa zone terminale libre,
- au moins un faisceau de filaments (FB) hélicoïdal placé dans le sens circonférentiel du tube de rotor (20a) étant disposé dans la zone du tube de rotor (20a), et
- la cloche de rotor portant sur le côté intérieur ou le côté extérieur du tube de rotor (20a) les éléments à aimants permanents (50) qui sont intégrés dans le matériau composite résine-fibres.

2. Moteur électrique (10) à excitation par aimants permanents selon la revendication 1,
- ledit au moins un faisceau de filaments (FB) du rotor (14) étant disposé d'une manière plus ou moins symétrique au centre ou à proximité du centre du fond de rotor (20b), le long de sécantes imaginaires.

3. Moteur électrique (10) à excitation par aimants permanents selon l'une des revendications de dispositif précédentes, le fond de rotor (20b) présentant sur des rayons ou des sécantes imaginaires des faisceaux de filaments (FB) s'étendant sensiblement parallèlement, dont au moins une des extrémités va jusqu'au-dessus du bord extérieur (20c) du fond de rotor (20b) et qui sont coudés au niveau du bord extérieur du fond de rotor (20b) et se poursuivent dans le tube de rotor (20a).

4. Moteur électrique (10) à excitation par aimants permanents selon l'une des revendications de dispositif précédentes,
- la cloche de rotor (20) possédant une épaisseur de paroi non uniforme et/ou étant formée entièrement à partir d'un matériau composite résine-fibres, et/ou
- la cloche de rotor (20) portant sur son côté intérieur ou sur son côté extérieur du tube de rotor (20a) des éléments à aimants permanents (50) qui sont intégrés dans le matériau composite résine-fibres, et/ou
- la cloche de rotor (20) étant constituée
(i) d'au moins un faisceau de filaments (FB) enroulés en hélice, d'un tissus en fibres ou d'un tissu non-tissé, et/ou
(ii) d'au moins un faisceau de filaments (FB) s'étendant sensiblement parallèlement,
lequel est disposé par couches se superposant au moins partiellement.

5. Moteur électrique (10) à excitation par aimants permanents selon l'une des revendications de dispositif précédentes,
- la cloche de rotor (20) portant sur son côté tourné vers l'entrefer (16) les éléments à aimants permanents (50) intégrés dans le matériau composite résine-fibres, lesquels sont profilés aux endroits où ils portent moins de 90 % du flux magnétique s'écoulant au maximum à travers l'élément à aimants permanents correspondant ; et/ou
- les éléments à aimants permanents (50) étant, sur leur côté opposé à l'entrefer et/ou sur leurs bords tournés vers l'entrefer, profilés, ondulés ou pourvus d'évidements en gradins.

6. Procédé pour fabriquer au moins deux cloches de rotor pour un moteur électrique (10) à excitation par aimants permanents selon l'une des revendications de dispositif précédentes, comportant les étapes suivantes :
- la mise à disposition d'un noyau de formage avec un premier et un second fond de formage et une pièce intermédiaire cylindrique d'un outil de formage constitué de plusieurs parties ; la pose couche après couche d'au moins un faisceau de filaments (FB) avec superposition au moins partiellement des couches sur le noyau de formage afin de former deux cloches de rotor adjacentes l'une à l'autre par leurs zones de bord en enroulant de manière continue ledit au moins un faisceau de filaments (FB) autour du premier fond de formage, le long de la pièce intermédiaire cylindrique et autour du second fond de formage, ledit au moins un faisceau de filaments (FB) allant du centre du premier fond de formage jusqu'au-dessus du bord extérieur du premier fond de formage, sensiblement le long de rayons ou de sécantes imaginaires, et ledit au moins un faisceau de filaments (FB) étant coudé au niveau du bord extérieur du premier fond de formage et allant de manière continue jusqu'au-dessus du second fond de formage en longeant la pièce intermédiaire cylindrique du noyau de formage dans le sens axial et/ou en formant un angle avec l'axe longitudinal médian (M) de la pièce intermédiaire cylindrique, ceci permettant de former
o un corps intégral qui représente deux cloches de rotor de symétrie inverse, dont chacune d'elles présente un tube de rotor (20a) et un fond de rotor (20b), et dans lesquelles des éléments de fixation réalisés sous la forme de filets de vis, de tenons ou de douilles filetées sont disposés à proximité ou au centre du fond de rotor (20b) pour coupler la cloche de rotor (20) à un arbre de machine, et qui présentent
o dans la zone du fond de rotor (20b) au moins un faisceau de filaments (FB), ledit au moins un faisceau de filaments (FB)
- étant posé à chaque fois d'une manière plus ou moins symétrique autour d'un élément de fixation (22), ledit faisceau de filaments (FB) étant replié sur l'élément de fixation (22) et se prolongeant suivant un angle compris entre environ 70 et environ 110°, et
- au moins un faisceau de filaments (FB) hélicoïdal placé dans le sens circonférentiel du tube de rotor (20a) étant disposé dans la zone du tube de rotor (20a),
- le durcissement du corps composite en fibres constitué à partir d'au moins un faisceau de filaments (FB) et de résine ; et
- le sectionnement du corps composite en fibres perpendiculairement à l'axe longitudinal médian de la pièce intermédiaire cylindrique pour obtenir deux cloches de rotor distinctes, et
- l'enlèvement des deux cloches de rotor distinctes du noyau de formage.

7. Procédé pour fabriquer au moins deux cloches de rotor pour un moteur électrique (10) à excitation par aimants permanents selon l'une des revendications de dispositif précédentes,
- ledit au moins un faisceau de filaments (FB) étant imprégné de résine avant ou pendant ou après sa mise en place sur le noyau de formage, et/ou
- ledit au moins un faisceau de filaments (FB) étant mis sous contrainte de traction avant ou pendant ou après son imprégnation de résine.

8. Procédé pour fabriquer au moins deux cloches de rotor pour un moteur électrique (10) à excitation par aimants permanents selon l'une des revendications de dispositif précédentes, ledit au moins un faisceau de filaments (FB) étant enroulé sous la forme d'un faisceau de filaments (FB) sans fin plusieurs fois autour du premier et du deuxième fond de formage ainsi qu'autour de la pièce intermédiaire cylindrique, le noyau de formage étant mis en rotation de manière continue ou discontinue autour de son axe longitudinal médian, et/ou au moins une tête de bobine amenant ledit au moins un faisceau de filaments (FB) au noyau de formage étant déplacée dans un mouvement de va-et-vient sensiblement parallèle ou suivant un angle aigu par rapport à l'axe longitudinal médian du noyau de formage.

9. Procédé pour fabriquer au moins deux cloches de rotor pour un moteur électrique (10) à excitation par aimants permanents selon l'une des revendications de dispositif précédentes,
- la mise en place du noyau de formage surmonté dudit au moins un faisceau de filaments (FB) dans au moins une coquille de formage de l'outil de formage de sorte à former une cavité dans laquelle se trouve ledit au moins un faisceau de filaments (FB),
- l'étanchéisation de la cavité de l'outil de formage,
- l'injection de résine dans la cavité de l'outil de formage,
- le durcissement desdites au moins deux cloches de rotor réalisées à partir dudit au moins un faisceau de filaments (FB) et de la résine injectée, et
- l'enlèvement desdites au moins deux cloches de rotor de la cavité.

10. Procédé pour fabriquer une cloche de rotor pour un moteur électrique (10) à excitation par aimants permanents selon l'une des revendications de dispositif précédentes, comportant les étapes suivantes :
la pose couche après couche de plusieurs couches se superposant au moins partiellement
(i) dudit au moins un faisceau de filaments (FB) sous la forme d'un corps bobiné de forme hélicoïdale, à partir de filaments ou de tissu en fibres annulaire
(ii) d'au moins un faisceau de filaments (FB) s'étendant sensiblement parallèlement sur le noyau de formage ou sur ladite au moins une coquille de formage pour réaliser les fonds de rotor (20) et/ou les tubes de rotor des deux cloches de rotor.

11. Procédé pour fabriquer une cloche de rotor pour un moteur électrique (10) à excitation par aimants permanents selon l'une des revendications de dispositif précédentes, comportant les étapes suivantes :
- la mise en place d'éléments à aimants permanents sur le noyau de formage avant la pose dudit au moins un faisceau de filaments sur le noyau de formage ou sur la coquille de formage avant la mise en place du noyau de formage dans la coquille de formage surmontée dudit au moins un faisceau de filaments.

12. Procédé pour fabriquer une cloche de rotor pour un moteur électrique (10) à excitation par aimants permanents selon l'une des revendications de dispositif précédentes, comportant les étapes suivantes :
la pose des éléments à aimants permanents dans le cas d'un moteur à rotor extérieur sur le noyau de formage ferromagnétique avant la pose dudit au moins un faisceau de filaments et/ou la pose des éléments à aimants permanents dans le cas d'un moteur à rotor intérieur sur la coquille de formage avant la mise en place du noyau de formage surmonté dudit au moins un faisceau de filaments dans la coquille de formage, les éléments à aimants permanents restant positionnés de manière stable sur le noyau de formage ou dans la coquille de formage grâce à leur force d'attraction magnétique ou, dans le cas d'aimants non magnétisés, étant maintenus fixes sur le noyau de formage ou dans la coquille de formage grâce à la force de maintien procurée par des éléments à aimants permanents, des électro-aimants ou par le vide, et les aimants étant laminés.

13. Rotor (14) d'un moteur électrique (10) à excitation par aimants permanents présentant les caractéristiques d'une des revendications de dispositif précédentes, ce rotor présentant une cloche de rotor (20), laquelle
o présente plusieurs couches de matériau composite résine-fibres,
o constitue un corps intégral présentant un tube de rotor (20a) et un fond de rotor (20b), et des éléments de fixation réalisés sous la forme de filets de vis, de tenons ou de douilles filetées et disposés à proximité ou au centre du fond de rotor (20b) pour coupler la cloche de rotor (20) à un arbre de machine, et
o présente dans la zone du fond de rotor (20b) au moins un faisceau de filaments (FB), lequel
- est à chaque fois posé d'une manière plus ou moins symétrique autour d'un élément de fixation (22), ledit faisceau de filaments (FB) étant replié sur l'élément de fixation (22) et se prolongeant suivant un angle compris entre environ 70 et environ 110°,
- va du centre du fond de rotor (20b) jusqu'au-dessus du bord extérieur (20c) du fond de rotor (20b), sensiblement le long de rayons ou de sécantes imaginaires ; et
- ledit au moins un faisceau de filaments (FB) est coudé au niveau du bord extérieur (20c) du fond de rotor (20b) et se poursuit de manière continue dans le tube de rotor (20a) dans le sens axial et/ou en formant un angle avec l'axe longitudinal médian du tube de rotor (20a) jusqu'à sa zone terminale libre,
- au moins un faisceau de filaments (FB) hélicoïdal placé dans le sens circonférentiel du tube de rotor (20a) étant disposé dans la zone du tube de rotor (20a), et
o le fond de rotor de la cloche de rotor ayant une forme sensiblement circulaire ou polygonale sur sa circonférence extérieure et étant réalisé sous la forme d'un disque polygonal, d'un disque circulaire, ou d'un anneau plat polygonal ou d'un anneau plat circulaire, et/ou
o le tube de rotor de la cloche de rotor présentant une forme de section transversale sensiblement circulaire ou polygonale, similaire à la forme du fond de rotor et/ou des filaments enroulés de manière hélicoïdale, et/ou
o le fond de rotor présentant des faisceaux de filaments présentant sur des rayons ou des sécantes imaginaires des faisceaux de filaments (FB) s'étendant sensiblement parallèlement, dont au moins une des extrémités va jusqu'au-dessus du bord extérieur du fond de rotor, et qui sont coudés au niveau du bord extérieur du fond de rotor et se poursuivent dans le tube de rotor, et/ou
o la cloche de rotor possédant une épaisseur de paroi non uniforme et/ou étant formée entièrement à partir d'un matériau composite résine-fibres, et/ou
o la cloche de rotor (20) portant sur son côté intérieur ou sur son côté extérieur du tube de rotor (20a) des éléments à aimants permanents (50) qui sont intégrés dans le matériau composite résine-fibres, et/ou la cloche de rotor (20) étant constituée dudit au moins un faisceau de filaments (FB) qui est disposé par couches se superposant au moins partiellement.
